# EUROPEAN PATENT SPECIFICATION

(11) **EP 3 156 236 B1**
(45) Date of publication and mention of the grant of the patent: **01.01.2020**
(21) Application number: 15807488.0
(22) Date of filing: 11.05.2015
(51) Int. Cl.: B41J 2/175, B01D 61/00, B01D 63/02, B41J 2/01, B41J 2/18, B41J 2/19

(54) **INKJET PRINTING APPARATUS**
TINTENSTRAHLDRUCKVORRICHTUNG
APPAREIL D'IMPRESSION À JET D'ENCRE

(30) Priority: 12.06.2014 JP 2014121247
(43) Date of publication of application: 19.04.2017
(73) Proprietor: Konica Minolta, Inc., Tokyo 100-7015 (JP)
(72) Inventor: URAKAMI, Takeshi, Tokyo 100-7015 (JP); YAMAGUCHI, Seiji, Tokyo 100-7015 (JP)
(74) Representative: Henkel & Partner mbB
(86) International application number: PCT/JP2015/063453
(87) International publication number: WO 2015/190201

(56) References cited:
- EP-A1- 1 016 533
- EP-A1- 2 305 470
- EP-A2- 2 657 033
- WO-A1-2006/064036
- JP-A- H01 247 167
- JP-A- 2004 167 839
- JP-A- 2006 192 638
- JP-A- 2008 260 311
- JP-A- 2009 006 729
- JP-A- 2009 101 516
- JP-A- 2010 155 928
- JP-A- 2011 042 104
- JP-A- 2011 073 412
- JP-A- 2011 161 714
- US-A1- 2006 152 562
- US-A1- 2010 165 020
- US-B2- 8 128 212

## Description

### TECHNICAL FIELD

The present invention relates to an inkjet printing apparatus.

### BACKGROUND ART

In an inkjet printing apparatus which ejects ink from a nozzle of an inkjet head using electromechanical transduction by a piezoelectric element to form an image on a printing medium, gas dissolved in the ink and remaining as a bubble can cause a failure that a nozzle does not eject ink, for example.

A conventional inkjet printing apparatus is known which includes a degassing module on an ink supplying path for supplying ink from an ink tank to the inkjet head. The degassing module includes a gas permeable membrane such as a hollow fiber membrane inside. Ink flows along one side of the gas permeable membrane. When an air pressure on the opposite side is reduced by a vacuum pump, the gas dissolved in the ink contacting the gas permeable membrane permeates through the gas permeable membrane and is removed.

In such an inkjet printing apparatus, a liquid feeding pump such as a diaphragm pump and a tube pump is provided on the ink supplying path from the ink tank to the inkjet head. Ink is supplied from the ink tank to the inkjet head by a liquid feeding operation of the liquid feeding pump.

In this case, if the ink includes a foreign substance, the ink passing through the liquid feeding pump can cause a scar on an interior member of the liquid feeding pump and damage the interior member.

To address such a problem, it is known that a filter to remove foreign substances is provided on the ink supplying path. For example, in an inkjet printing apparatus which includes an ink cartridge, a liquid feeding pump, a degassing module and an ink jet head in this order from upstream of an ink supplying direction, there is a technique in which a filter to remove foreign substances in the ink is provided between the ink cartridge and the liquid feeding pump (for example, refer to JP 2012-171191 A).

US 2010/0165020 A1 discloses an ink jet printing apparatus including an ink tank, and ink jet head to which ink from the ink tank can be supplied via a sub-tank and an ink supplying path and a liquid feeding pump and a filter. The ink jet printing apparatus has a degassing module in a flow path for recirculating ink from the ink jet head to the sub-tank via a further pump and a filter and a pump.

US 8128212 B2 discloses another ink jet recording apparatus in which a filter is arranged upstream of a degasser.

WO 2006/064036 A1 discloses an ink jet printing apparatus and an ink circulation system in which a pump is arranged upstream of a filter on the ink supplying path.

EP 2305470 A1 discloses an inkjet printer and a filter for an ink jet printer in which a recovery filter and a solvent filter are integrally connected to a top face of a channel block to which a pressure-reducing valve is integrally connected at a front face.

### SUMMARY OF INVENTION

### PROBLEM TO BE SOLVED BY THE INVENTION

However, in such an inkjet printing apparatus, when the filter is clogged due to a continuous operation, if liquid continues to be fed by the liquid feeding pump with the filter being clogged, the pressure at the portion of the liquid feeding pump where the ink flows in decreases, and the phenomenon called cavitation occurs and it becomes easier for bubbles to be generated in the ink. Under the existence of bubbles in ink, the amount of liquid fed by the liquid feeding pump becomes unstable and ensuring to feed the sufficient amount of liquid can become difficult.

An object of the present invention is to provide an inkjet printing apparatus which can suppress the damage of a liquid feeding pump due to the mixed foreign substances and which can suppress the occurrence of cavitation even when the inkjet printing apparatus is continuously used.

### MEANS FOR SOLVING THE PROBLEM

To solve the object described above, the invention provides an inkjet printing apparatus of claim 1 which is configured to remove gas dissolved in ink by a degassing module provided on an ink supplying path which supplies ink from an ink tank to an inkjet head, including inter alia:
a liquid feeding pump which feeds ink and which is provided on the ink supplying path from the degassing module to the inkjet head; and
a foreign substance removal filter which is provided on the ink supplying path from the degassing module to the liquid feeding pump.

Preferably, the foreign substance removal filter removes a foreign substance having a particle diameter equal to or larger than 70µm.

Preferably, the foreign substance removal filter removes a foreign substance having a particle diameter equal to or larger than a nozzle diameter of the inkjet head.

The inkjet printing apparatus according to the invention, further includes:
a flow passage member inside which the ink supplying path between the degassing module and the liquid feeding pump is formed, wherein
the foreign substance removal filter is detachably attached on an outer surface of the flow passage member.

### EFFECTS OF THE INVENTION

In accordance with the present invention, the damage of a liquid feeding pump due to mixed foreign substances can be suppressed and the occurrence of cavitation can be suppressed even in a case of continuous operation.

### BRIEF DESCRIPTION OF DRAWINGS

FIG. 1 is a schematic view showing an overall configuration of an inkjet printing apparatus according to the present invention.
FIG. 2 is a view explaining an ink flow passage.
FIG. 3 is a schematic cross-sectional view of a degassing module.
FIG. 4 is a schematic perspective view showing a configuration around a foreign substance removal filter and a liquid feeding pump.
FIG. 5 is a schematic plan view showing a configuration around the foreign substance removal filter and the liquid feeding pump.

### DESCRIPTION OF PREFERRED EMBODIMENTS

Hereinafter, an inkjet printing apparatus according to embodiments of the present invention will be described in detail with reference to the drawings. The scope of the present invention will not be limited to illustrated examples. In the following description, components which have the same function and configuration will be denoted by the same reference numerals and the explanation thereof will be omitted.

An inkjet printing apparatus 1 of the present invention includes a sheet feeding unit 10, an image formation unit 20, a sheet ejection unit 30, a controller unit 40 and an ink supplying unit 50. In the inkjet printing apparatus 1, based on a control by the controller unit 40, the image formation unit 20 forms an image by ink supplied from the ink supplying unit 50 on a printing medium P which is conveyed to the image formation unit 20 from the sheet feeding unit 10, and thereafter the printing medium P is ejected to the sheet ejection unit 30.

The sheet feeding unit 10 keeps the printing medium P on which an image is to be formed and feeds the printing medium P to the image formation unit 20 before the image is formed. The sheet feeding unit 10 includes a sheet tray 11 and a conveying unit 12.

The sheet tray 11 is a plate-like member on which one or more printing media P are placed. The sheet tray 11 is provided so as to move vertically in response to the amount of the printing media P placed thereon. The uppermost printing medium P is kept at a position so as to be conveyed by the conveying unit 12.

The conveying unit 12 includes a conveying mechanism which conveys the printing medium P on a looped belt 123 by driving the belt 123 by rotating multiple (for example, two) rollers 121, 122, and a supplying unit which passes to the belt 123 the uppermost printing medium P among the printing media P placed on the sheet tray 11. The conveying unit 12 conveys the printing medium P which is passed to the belt 123 by the supplying unit by the rotational operation of the belt 123.

The image formation unit 20 forms an image by ejecting ink onto the printing medium P. The image formation unit 20 includes an image formation drum 21, a passing unit 22, a sheet heating unit 23, head units 24, an irradiation unit 25 and a delivery unit 26.

The image formation drum 21 supports the printing medium P along an outer cylindrical circumference thereof and conveys the printing medium P while rotating. A conveyance surface of the image formation drum 21 faces the sheet heating unit 23, the head units 24 and the irradiation unit 25 which each carry out processing on the printing medium P with respect to an image formation.

The passing unit 22 is provided at a position between the conveying unit 12 of the sheet feeding unit 10 and the image formation drum 21, and passes the printing medium P conveyed by the conveying unit 12 to the image formation drum 21. The passing unit 22 includes, for example, a swing arm unit 221 which supports an end of the printing medium P which is conveyed by the conveying unit 12 and a cylindrical passing drum 222 which passes to the image formation drum 21 the printing medium P supported by the swing arm unit 221. The swing arm unit 221 picks up the printing medium P on the conveying unit 12 to pass to the passing drum 222, whereby the printing medium P is passed to the image formation drum 21 so as to be guided in a direction along the outer circumference of the image formation drum 21.

The sheet heating unit 23 heats the printing medium P supported by the image formation drum 21. The sheet heating unit 23 includes, for example, an infrared heater and emits heat when electric current is applied. The sheet heating unit 23 is provided in a vicinity of the outer circumference of the image formation drum 21 and on an upstream side of the head units 24 along the conveyance direction of the printing medium P when the image formation drum 21 is rotated. Emitted heat of the sheet heating unit 23 is controlled by the controller unit 40 such that the printing medium P which is supported by the image formation drum 21 and which passes in a vicinity of the sheet heating unit 23 has a predetermined temperature.

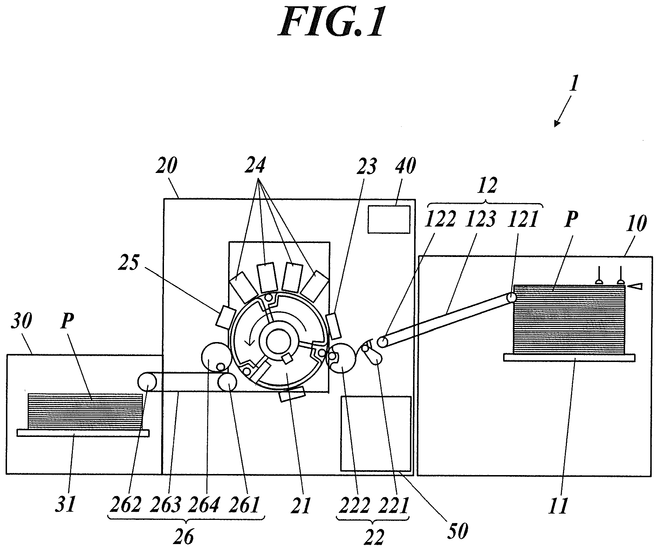

The head units 24 eject ink onto the printing medium P supported on the image formation drum 21 to form an image. The head units 24 are provided such that each of the head units 24 corresponds to different one of colors C (cyan), M (magenta), Y (yellow) and K (black). In FIG. 1, the head units corresponding to colors Y, M, C and K are provided in this order from the upstream side of the conveyance direction of the printing medium P which is conveyed when the image formation drum 21 is rotated.

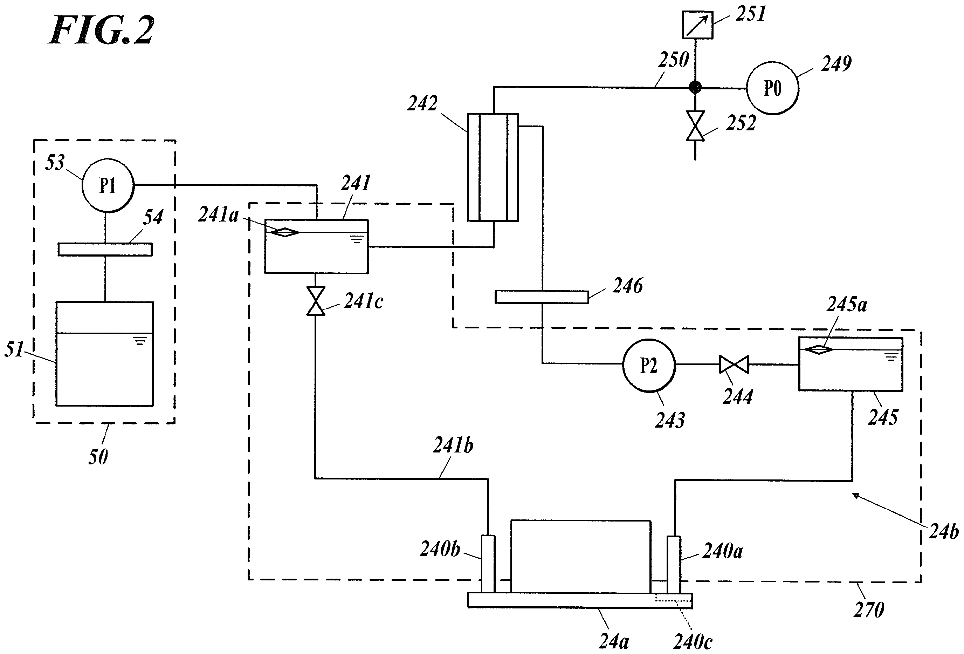

Each of the head units 24 of the present embodiment is provided so as to have a length (width) which covers the entire printing medium P along an orthogonal direction with respect to the conveyance direction of the printing medium P. That is, the inkjet printing apparatus 1 is a one-pass line head inkjet printing apparatus . The head unit 24 can constitute a line head by arranging a plurality of printing heads (inkjet heads) 24a (refer to FIG. 2).

After the ink used in the inkjet printing apparatus 1 of the present embodiment is ejected onto the printing medium P, the irradiation unit 25 irradiates an energy ray to cause the curing of the ink. The irradiation unit 25 includes, for example, a fluorescent tube such as a low pressure mercury lamp, and irradiates an energy ray such as an ultra violet ray by causing the fluorescent tube to emit light. The irradiation unit 25 is provided in a vicinity of the outer circumference of the image formation drum 21 and on a downstream side of the head units 24 along the conveyance direction of the printing medium P when the image formation drum 21 is rotated. The irradiation unit 25 irradiates an energy ray to the printing medium P which is supported on the image formation drum 21 and onto which the ink is ejected, and causes the curing of the ink ejected onto the printing medium P due to an effect of the energy ray.

As a fluorescent tube which emits an ultraviolet ray, a mercury lamp having an operating pressure of a few hundreds Pa to 1M Pa, a light source usable as a germicidal lamp, a cold-cathode tube, an ultraviolet laser light source, a metal halide lamp, a light emitting diode as well as a low pressure mercury lamp can be used. Among them, a light source which can irradiate an ultraviolet ray at high illumination intensity and which consumes low electricity is preferable (for example, a light emitting diode). The energy ray is not limited to an ultraviolet ray. Any energy ray which causes the curing of ink in accordance with the characteristic of the ink can be used. The light source can also be replaced in accordance with a wavelength of the energy ray, for example.

The delivery unit 26 conveys the printing medium P on which an energy ray is irradiated by the irradiation unit 25 from the image formation drum 21 to the sheet ejection unit 30. The delivery unit 26 includes, for example, a conveying mechanism in which a looped belt 263 is driven by rotating a plurality of (for example, two) rollers 261, 262 to convey the printing medium P on the belt 263, and a cylindrical passing drum 264 which passes the printing medium P from the image formation drum 21 to the conveying mechanism. The delivery unit 26 conveys the printing medium P which is passed to the belt 263 by the passing drum 264 to the sheet ejection unit 30 by the belt 263.

The sheet ejection unit 30 stores the printing medium P which is sent from the image formation unit 20 by the delivery unit 26. The sheet ejection unit 30 includes, for example, a plate-like sheet ejection tray 31 and the printing medium P is placed on the sheet ejection tray 31 after forming an image.

The ink supplying unit 50 stores ink and supplies the ink to the head units 24 of the image formation unit 20 to enable the ink of each color to be ejected from the nozzle of each head unit 24.

The ink used for the inkjet printing apparatus 1 of the present embodiment is, but not limited to, ultraviolet (UV) curable ink. When an ultraviolet ray is not irradiated, the ultraviolet curable ink undergoes the phase transition between a gel state and a liquid (sol) state in accordance with a temperature. For example, the ink has a predetermined phase transition temperature of about 40°C to 100°C. The ink uniformly liquefies (solates) when the ink is heated to a temperature equal to or higher than the phase transition temperature. The ink gelates at a temperature equal to or below the predetermined temperature including an ordinary room temperature (0 to 30°C).

Next, a flow passage of ink in the inkjet printing apparatus 1 will be described with reference to FIG. 2.

In the inkjet printing apparatus 1 of the present embodiment, ink pumped out from an ink tank 51 of the ink supplying unit 50 by a supplying pump 53 is supplied to each printing head 24a through an ink flow passage (ink supplying path) 24b. Ink which is not ejected from each printing head 24a is returned to the ink flow passage 24b as required.

A filter 54 is provided between the ink tank 51 and the supplying pump 53 in the ink supplying unit 50. Thus, foreign substances mixed in the ink can be removed and it is possible to suppress inflow of foreign substances into the ink flow passage 24b.

On the ink flow passage 24b, a first sub tank 241, a degassing module 242, a foreign substance removal filter 246, a liquid feeding pump 243, a check valve 244 and a second sub tank 245 are provided, for example.

The printing head 24a and ink flow passage 24b are heated and kept warm by an ink heating unit 270 composed of, for example, a heater and a heat-transfer member which transfers heat from the heater such that the temperature of the ink is kept at an appropriate temperature. A heating wire is used as the heater of the ink heating unit 270, for example, and generates Joule heat when current is applied. A heat-transfer plate formed of a material having a high heat-transfer coefficient such as a variety of metals (alloys) is used as the heat-transfer member. The heat-transfer member is provided so as to cover a piping of the ink flow passage 24b and to contact side walls of the first sub tank 241 and the second sub tank 245.

The degassing module 242 is connected with a vacuum pump 249 to reduce the gas pressure in the degassing module 242, a vacuum path 250 which connects the vacuum pump 249 and the degassing module 242, a pressure sensor which measures a gas pressure in the vacuum path 250 and an atmospheric relief valve 252 which can switch the vacuum path 250 between an air-tight state and a state open to atmospheric air.

The first sub tank 241 is one or more ink chambers each of which has a volume smaller than that of the ink tank 51. The first sub tank 241 stores the ink pumped out from the ink tank 51 by the supplying pump 53. A first float sensor 241a is provided in the first sub tank 241. The controller unit 40 operates the supplying pump 53 based on the detection data of liquid surface position detected by the first float sensor 241a such that a predetermined amount of ink is stored in the first sub tank 241.

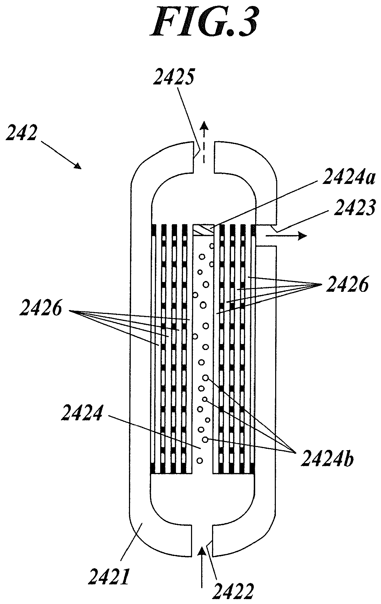

The degassing module 242 is formed so as to have a cylindrical shape, for example. The degassing module 242 removes gas (degasses) dissolved in the ink which flows in and ejects degassed ink. As shown in FIG. 3, the degassing module 242 has a structure in which many hollow fiber membranes 2426 cover a central pipe 2424 inside an outer shell 2421. One end of the central pipe 2424 is connected to an ink inlet 2422 and the other end is closed by a plug 2424a. Many small holes (perforations) are provided on an outer wall of the central pipe 2424. The ink flows in from the ink inlet 2422, flows out from these small holes 2424b and flows out from an ink outlet 2423.

In the example shown in FIG. 3, the ink outlet 2423 is provided in a lateral direction such that the ink flows out in a lateral direction of the degassing module 242. The direction of the ink outlet 2423 is not limited to this example, but may be provided in any direction and may be configured such that the ink flows out in any direction.

The hollow fiber membrane 2426 has a structure including many fine hollow fibers. One end of each of hollow fibers is closed. The membrane surface of the hollow fiber membrane 2426 has gas permeability. The other end of the fine hollow fibers of the hollow fiber membrane 2426 is connected to the gas outlet 2425 to which the vacuum path 250 is connected. By sucking with the vacuum pump 249, the pressure inside the hollow fiber membrane 2426 is reduced. In this state, when ink contacts the surface of the hollow fiber membrane 2426, only the gas dissolved in the ink selectively permeates the surface of the membrane and the ink is degassed. The dissolved gas which passes through the hollow fiber membrane 2426 flows through the vacuum path 250.

The vacuum pump 249 shown in FIG. 2 is a diaphragm pump including a pump chamber which includes an expandable diaphragm and a drive source which operates the diaphragm such that the volume of the pump chamber increases or decreases. The pump chamber includes an inlet which includes a check valve which only allows the inflow of fluid from outside and an outlet which includes a check valve which only allows the outflow of fluid from inside.

The pressure sensor 251 detects a gas pressure in the vacuum path 250 and outputs a detection result to the controller unit 40. The controller unit 40 controls the operation of vacuum pump 249 based on the detection result of the pressure sensor 251.

The atmospheric relief valve 252 is an electromagnetic valve which can switch the vacuum path 250 between an air-tight state and a state open to atmospheric air in accordance with an operation command from the controller unit 40.

The liquid feeding pump 243 sends the ink which flows out from the ink outlet 2423 of the degassing module 242 to the second sub tank 245. A diaphragm pump can be used as the liquid feeding pump 243 similarly to the vacuum pump 249. A check valve 244 is provided between the liquid feeding pump 243 and the second sub tank 245. The check valve 244 prevents the ink which is once sent to the second sub tank 245 from flowing back.

A pump other than a diaphragm pump may be used as the liquid feeding pump 243. A variety of pumps which are each conventionally used as a liquid feeding pump for ink such as a tube pump and a gear pump can be applied.

The foreign substance removal filter 246 is provided on the ink flow passage 24b between the degassing module 242 and the liquid feeding pump 243. The foreign substance removal filter 246 collects and removes foreign substances when ink passes through the foreign substance removal filter 246. The pore diameter of the foreign substance removal filter 246 is preferably such a pore diameter that a foreign substance having a particle diameter of 70µm or more can be removed, and more preferably, the pore diameter of the foreign substance removal filter 246 is such a pore diameter that a foreign substance having a particle diameter equal to or greater than a nozzle diameter of the printing head 24a can be removed. The particle diameter of a foreign substance is the maximum diameter of the foreign substance. For example, when the foreign substance is a sphere, the particle diameter is a diameter thereof, when the foreign substance is an ellipsoid, the particle diameter is the length of the major axis, and when the foreign substance is a cube or a cuboid, the particle diameter is the length of the longest diagonal. The nozzle diameter is a diameter of an opening when the opening at the tip of a nozzle along an ejecting direction is circular. When the opening is not circular, the nozzle diameter is a diameter of a circle which has the same area as that of the opening. An example of the nozzle diameter of the printing head 24a is 10 to 30µm.

Such foreign substance removal filter 246 may be formed of a metal such as SUS (stainless steel) or a resin.

The foreign substance removal filter 246 is preferably provided in proximity of the liquid feeding pump 243. Even if a foreign substance is mixed into ink in the ink flow passage 24b between the degassing module 242 and the liquid feeding pump 243, the foreign substance flowing into the liquid feeding pump 243 can be suppressed.

Since the foreign substance removal filter 246 having such a configuration is provided on the ink flow passage 24b between the degassing module 242 and the liquid feeding pump 243, the foreign substance flowing into the liquid feeding pump 243 can be suppressed. Also, by arranging the foreign substance removal filter 246 in such a manner, even if the foreign substance removal filter 246 is clogged, the occurrence of cavitation can be suppressed because the ink which flows between the foreign substance removal filter 246 and the liquid feeding pump 243 is already degassed by the degassing module 242.

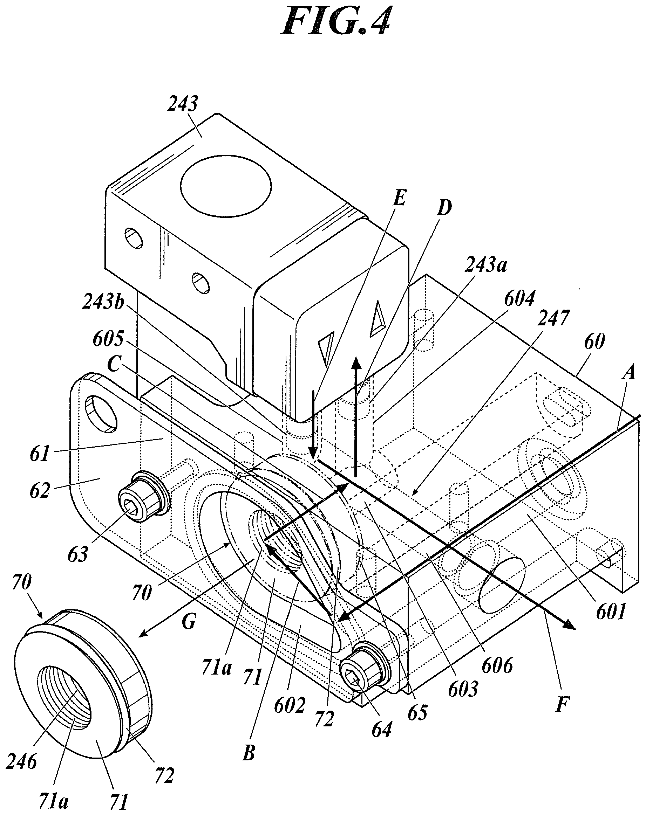

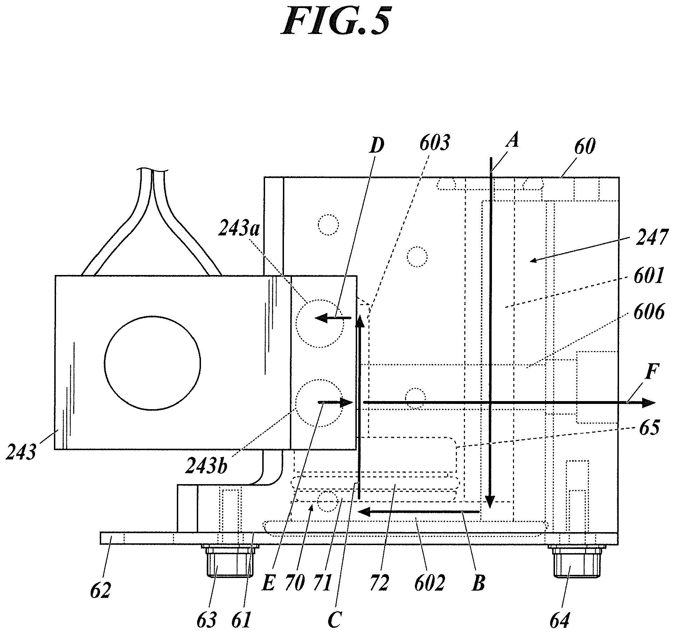

An example of a configuration around the foreign substance removal filter 246 and the liquid feeding pump 243 will be described with reference to FIGS. 4 and 5.

An ink flow passage 247 around the foreign substance removal filter 246 and the liquid feeding pump 243 is formed by cutting an inner part of a flow passage member 60. The ink flow passage 247 itself is formed by the flow passage member 60. The foreign substance removal filter 246 is detachably attached to an outer surface of the flow passage member 60 facing thereto. Thereby, even when a cutting chip peels from the ink flow passage 247 on the upstream side of the foreign substance removal filter 246 during use, for example, the cutting chip is collected and removed by the foreign substance removal filter 246. Furthermore, since the foreign substance removal filter 246 is provided so as to face the outer surface of the flow passage member 60, the foreign substance removal filter can be easily replaced.

The flow passage member 60 is preferably formed of a material which has a high heat transfer coefficient. From the viewpoint of heat conductivity and cost, the flow passage member 60 is preferably formed of a metal such as aluminum and an alloy. The flow passage member 60 is formed so as to have substantially a cuboid shape. The ink flow passage 247 is formed by cutting the inner part of the flow passage member 60 by a cutting tool such as a drill. The flow passage member 60 is heated by the ink heating unit 270, and thus, ink which passes through the ink flow passage 247 can be heated.

The ink flow passage 247 is composed of a plurality of flow passages 601 to 606 inside the flow passage member 60. The flow passage 601 is formed so as to extend substantially in a horizontal direction. Ink flows out from the degassing module 242, flows into the flow passage member 60 (ink flow passage 247) and flows in the flow passage 601 in the direction shown by arrow A in FIG. 4. The flow passage 602 communicates with the flow passage 601 and is composed of a recessed channel on an outer surface 61 of the flow passage member 60 which is closed by a plate-like lid member 62. Ink flows from the flow passage 601 and flows into the flow passage 602 in the direction shown by arrow B in FIG. 4. The lid member 62 is detachably attached to the outer surface 61 by inserting screws 63 and 64. The flow passage 603 communicates with the flow passage 602 and is formed so as to extend substantially in a horizontal direction. Ink flows from the flow passage 602 and flows into the flow passage 603 in a direction shown by arrow C in FIG. 4. A fitting section 65 is formed at a part where the flow passage 602 and the flow passage 603 communicate with each other. The fitting section 65 has substantially the same shape as that of a supporting member 71 of a filter unit 70 described below and is to be fitted with the filter unit 70. Therefore, ink flows into the flow passage 602, passes through the fitting section 65 and flows into the flow passage 603. The flow passage 604 communicates with the flow passage 603 and is formed so as to extend substantially in a vertical direction. The flow passage 604 is connected to an inlet 243a of the liquid feeding pump 243 which is provided above the flow passage member 60. Ink flows into the flow passage 604 from the flow passage 603 and flows in a direction shown by arrow D in FIG. 4. Since the liquid feeding pump 243 is arranged in this way, the liquid feeding pump 243 is positioned above the foreign substance removal filter 246. Even when a foreign substance is mixed between the foreign substance removal filter 246 and the liquid feeding pump 243, the arrival of the foreign substance at the liquid feeding pump 243 can be suppressed. The flow passage 605 is connected with an outlet 243b of the liquid feeding pump 243 and is formed so as to extend substantially in a vertical direction. Ink flows out from the liquid feeding pump 243 and flows in the flow passage 605 in a direction shown by arrow E in FIG. 4. A flow passage 606 is formed so as to extend substantially in a horizontal direction. One end of the flow passage 606 communicates with the flow passage 605 and the other end of flow passage 606 communicates with an exterior of the flow passage member 60. Ink flows from the flow passage 605 into the flow passage 606 and flows in the flow passage 606 in a direction shown by arrow F of FIG. 4. Thus, ink flows out from the degassing module 242, flows into the ink flow passage 247 and is sent to the second sub tank 245 by the liquid feeding pump 243.

The shapes and arrangements of the flow passages 601 to 606 constituting the ink flow passage 247 are not limited to this, but any configuration is possible in which ink flows into the liquid feeding pump 243 through the foreign substance removal filter 246 in the flow passage member 60.

As shown in FIG. 4, the foreign substance removal filter 246 is provided inside the cylindrical shaped supporting member 71 and they constitute a filter unit 70. A female screw part 71a is formed on an internal circumferential surface of the supporting member 71. An O-ring 72 is provided on an outer circumferential surface of the supporting member 71.

The filter unit 70 having such a configuration is provided at the fitting section 65 by fitting thereto. The fitting section 65 is formed at a part where the flow passage 602 and the flow passage 603 communicate with each other. The filter unit 70 is arranged such that the foreign substance removal filter 246 is opened in the outer surface 61 of the flow passage member 60 and the foreign substance removal filter 246 is facing the lid member 62. The supporting member 71 of the filter unit 70 has substantially the same shape as that of the fitting section 65. Since the O-ring 72 tightly contacts the outer circumferential surface of the supporting member 71 and the inner circumferential surface of the fitting section 65 therebetween, the filter unit 70 is fixed to the fitting section 65 detachably. Thereby, ink which flows into the flow passage 602 flows into the flow passage 603 after passing through the filter unit 70 where the foreign substance is removed.

Since the filter unit 70 is provided in this way, replacing the foreign substance removal unit 246 is easy. When the filter unit 70 is configured as described above, the foreign substance removal unit 246 is replaced with the entire filter unit 70.

Specifically, first, the screws 63 and 64 are removed, and the lid member 62 is removed from the outer surface 61 of the flow passage member 60. When the lid member 62 is removed, since the filter unit 70 becomes exposed, whether the foreign substance removal filter 246 is clogged or not can be checked visually. When the foreign substance removal filter 246 is removed, a predetermined male screw member (not shown) is screwed into the female screw part 71a formed on the inner circumferential surface of the supporting member 71. By pulling out the male screw member along the axial direction of the supporting member 71 (the direction shown by arrow G in FIG. 4), the filter unit 70 can be removed from the flow passage member 60. After a new filter unit 70 is pushed into the fitting section 65 so as to be fitted thereto, the lid member 62 is attached to the outer surface 61 of the flow passage member 60 by screws 63 and 64 again. As described above, the filter unit 70 can be replaced easily.

The second sub tank 245 shown in FIG. 2 is a small ink chamber which temporarily stores ink which is degassed in the degassing module 242. The volume of the second sub tank 245 is substantially the same as that of the first sub tank 214, but this is not limitative. The second sub tank 245 is connected to an inlet 240a of each printing head 24a, and ink is supplied to each printing head 24a in accordance with the amount of ink to be ejected from the nozzle. A second float sensor 245a is provided at the second sub tank 245. The controller unit 40 operates the liquid feeding pump 243 based on the detection data of liquid surface position detected by the second float sensor 245a such that a predetermined amount of ink is stored in the second sub tank 245. The controller unit 40 detects the stored amount in the second sub tank 245 after a predetermined time elapsed based on the detection data detected by the second float sensor 245a. When the stored amount is different from a predetermined amount, the controller unit 40 can detect that liquid feeding is not normal. In this case, the controller unit 40 may alarm a user by displaying that the liquid feeding is not normal on a display (not shown) . A user can know that there is a possibility that the foreign substance removal filter 246 is clogged in an early stage. Alarming a user that the liquid feeding is not normal may be carried out by audio output and/or light emission of a luminous body (not shown).

A filter 240c is provided inside the printing head 24a between the inlet 240a and the nozzle (not shown). The pore diameter of the filter 240c is such a diameter that foreign substance having a diameter equal to or larger than the diameter of the nozzle of the printing head 24a can be removed.

As described above, the pore diameter of the filter 54 of the ink supplying unit 50, the pore diameter of the foreign substance removal filter 246, and the pore diameter of the filter 240c are preferably decreasing in this order. Owing to this configuration, it is possible to suppress the damage of the liquid feeding pump 243 due to the inflow of foreign substances, to suppress the clogging of the degassing module 242 due to the inflow of foreign substances and to suppress the damage of the nozzle of the printing head 24a.

The filters 54 and 240c may not be provided.

Ink which is not ejected from the nozzle of the printing head 24a can be returned to the first sub tank 241 from an outlet 240b through a collecting path 241b and a bulb 241c. When ink needs to be discharged from the ink flowing passage 24b in case of maintenance of the printing head 24a, for example, ink in the printing head 24a can be collected by opening the bulb 241c without being discarded.

The controller unit 40 controls the operation of each section of the inkjet printing apparatus 1 and manages the overall operation of the inkjet printing apparatus 1. The controller unit 40 includes, for example, a CPU (Central Processing Unit), a ROM (Read Only Memory) and a RAM (Random Access Memory). In the controller unit 40, various programs such as a system program stored in the ROM are read and are loaded to the RAM, and, by carrying out the program loaded to the RAM by the CPU, various controlling processes such as an image formation process and the detection that the liquid feeding is not normal described above are carried out.

In accordance with the embodiment described above, an inkjet printing apparatus 1 which removes gas dissolved in ink by a degassing module 242 provided on an ink flow passage 24b which supplies ink from an ink tank 51 to an printing head 24a, includes a liquid feeding pump 243 which feeds ink and which is provided on the ink flow passage 24b from the degassing module 242 to the printing head 24a; and a foreign substance removal filter 246 which is provided on the ink flow passage 24b from the degassing module 242 to the liquid feeding pump 243. The damage of the liquid feeding pump 243 due to a mixed foreign substance can be suppressed. Even when the foreign substance removal filter 246 is clogged due to a continuous use, since the ink in the region of the ink flow passage 24b between the foreign substance removal filter 246 and the degassing module 242 is degassed, the occurrence of cavitation due to the decrease of pressure in the region can be effectively suppressed.

In case where the foreign substance removal filter 246 removes a foreign substance having a particle diameter equal to or larger than 70µm, the damage of the liquid feeding pump 243 can be suppressed more certainly.

In case where the foreign substance removal filter 246 removes a foreign substance having a particle diameter equal to or larger than the nozzle diameter of the printing head 24a, not only the damage of the liquid feeding pump 243 can be suppressed more certainly, but also the clogging of the nozzle of the printing head 24a can be suppressed.

Since the flow passage member 60 inside which the ink flow passage 24b between the foreign substance removal filter 246 and the liquid feeding pump 243 is formed and the foreign substance removal filter 246 is detachably attached to the outer surface of the flow passage member 60, the foreign substance removal filter 246 can be easily replaced.

The above description of the embodiment is an example of an inkjet printing apparatus according to the present invention, but not limited thereto. The detailed configuration of each of the functional sections which constitute the inkjet printing apparatus and the detailed operation may be modified as appropriate within the scope of the claims.

The present invention may be applied to any one of an external circulation type hollow fiber degassing module and an internal circulation type hollow fiber degassing module.

In the embodiment described above, the ink flow passage 247 around the foreign substance removal filter 246 and the liquid feeding pump 243 is formed inside the flow passage member 60. However, this is not limitative. The ink flow passage 247 may be formed from pipes, for example. The ink flow passage 24b other than the ink flow passage 247 may be formed inside a predetermined flow passage member.

In the embodiment described above, the degassing module 242 is connected to the vacuum pump 249 through the vacuum path 250. However, an ink trap for storing liquid component may be provided in front of the vacuum pump 249 along the vacuum path 250. Not only the gas dissolved in ink but also very little amount of liquid component may actually permeate the hollow fiber membrane 2426 of the degassing module 242. Thus, there is a case where the liquid component infiltrates into the vacuum path 250. By providing an ink trap, it is possible to suppress the inflow of the liquid component to the vacuum pump 249 and to protect the vacuum pump 249.

### INDUSTRIAL APPLICABILITY

As described above, the present invention is suitable for providing an inkjet printing apparatus which can suppress damage to a liquid feeding pump due to mixing of a foreign substance and which can suppress the occurrence of cavitation even when the inkjet printing apparatus is continuously used.

### DESCRIPTION OF REFERENCE NUMERALS

- 1: inkjet printing apparatus
- 24: head unit
- 24a: printing head (inkjet head)
- 24b: ink flow passage (ink supplying path)
- 40: controller unit
- 50: ink supplying unit
- 51: ink tank
- 53: supplying pump
- 54: filter
- 60: flow passage member
- 240c: filter
- 241: first sub tank
- 241a: first float sensor
- 242: degassing module
- 243: liquid feeding pump
- 244: check valve
- 245: second sub tank
- 245a: second float sensor
- 246: foreign substance removal filter
- 249: vacuum pump
- 270: ink heating unit
- P: printing medium

## Claims

1. An inkjet printing apparatus (1) comprising:
an ink tank (51), an inkjet head (24a), an ink supplying path (24b) which is configured to supply ink from the ink tank (51) to the inkjet head (24a), and a degassing module (242) provided on the ink supplying path (24b) for removing gas dissolved in ink;
a liquid feeding pump (243) which is configured to feed ink and which is provided on the ink supplying path (24b) from the degassing module (242) to the inkjet head (24a);
a foreign substance removal filter (246) which is provided on the ink supplying path (24b) from the degassing module (242) to the liquid feeding pump (243);
**characterized in that** the inkjet printing apparatus further comprises:
a flow passage member (60) inside which the ink supplying path (24b) between the degassing module (242) and the liquid feeding pump (243) is formed,
wherein the foreign substance removal filter (246) is detachably attached on an outer surface of the flow passage member (60).

2. The inkjet printing apparatus (1) according to claim 1, wherein the foreign substance removal filter (246) is configured to remove a foreign substance having a particle diameter equal to or larger than 70µm.

3. The inkjet printing apparatus (1) according to claim 1 or 2, wherein the foreign substance removal filter (246) is configured to remove a foreign substance having a particle diameter equal to or larger than a nozzle diameter of the inkjet head (24a).

4. The inkjet printing apparatus (1) according to any one of claims 1 to 3, wherein the flow passage member (60) is formed of a material which has a high heat transfer coefficient, preferably of a metal.

5. The inkjet printing apparatus (1) according to claim 4, wherein the flow passage member (60) is arranged to be heated by an ink heating unit (270) of the inkjet printing apparatus (1) .

6. The inkjet printing apparatus (1) according to any one of claims 1 to 5, further comprising
a sub tank (245) which is provided on the ink supplying path (24b) between the liquid feeding pump (243) and the inkjet head (24a) and which is configured to store ink sent from the liquid feeding pump (243); and
a controller unit (40) configured to detect a stored amount of ink in the sub tank (245) and to alarm a user in case the detected stored amount is different from a predetermined amount.

## Patentansprüche

1. Eine Tintenstrahldruckvorrichtung (1) mit:
einem Tintentank (51), einem Tintenstrahlkopf (24a), einem Tintenzuführweg (24b), der konfiguriert ist, um Tinte von dem Tintentank (51) zu dem Tintenstrahlkopf (24a) zuzuführen, und einem Entgasungsmodul (242), das an dem Tintenzuführweg (24b) zum Entfernen von in Tinte gelöstem Gas vorgesehen ist,
einer Flüssigkeitsförderpumpe (243), die konfiguriert ist, um Tinte zu fördern und die an dem Tintenzuführweg (24b) von dem Entgasungsmodul (242) zu dem Tintenstrahlkopf (24a) vorgesehen ist,
einem Fremdkörper-Entfernungsfilter (246), der an dem Tintenzuführweg (24b) von dem Entgasungsmodul (242) zu der Flüssigkeitsförderpumpe (243) vorgesehen ist,
**dadurch gekennzeichnet, dass** die Tintenstrahldruckvorrichtung ferner aufweist:
ein Strömungsdurchgangselement (60) im Inneren von dem der Tintenzuführweg (24b) zwischen dem Entgasungsmodul (242) und der Flüssigkeitsförderpumpe (243) ausgebildet ist,
wobei der Fremdkörper-Entfernungsfilter (246) abnehmbar an einer äußeren Oberfläche des Strömungsdurchgangselements (60) angebracht ist.

2. Die Tintenstrahldruckvorrichtung (1) gemäß Anspruch 1, wobei der Fremdkörper-Entfernungsfilter (246), konfiguriert ist, um einen Fremdkörper mit einem Teilchendurchmesser gleich oder größer als 70 µm zu entfernen.

3. Die Tintenstrahldruckvorrichtung (1) gemäß Anspruch 1 oder 2, wobei der Fremdkörper-Entfernungsfilter (246) konfiguriert ist, um einen Fremdkörper mit einem Teilchendurchmesser gleich oder größer als ein Düsendurchmesser des Tintenstrahlkopfs (24a) zu entfernen.

4. Die Tintenstrahldruckvorrichtung (1) gemäß einem der Ansprüche 1 bis 3, wobei das Strömungsdurchgangselement (60) aus einem Material gebildet ist, das einen hohen Wärmeübertragungskoeffizienten besitzt, vorzugsweise aus einem Metall.

5. Die Tintenstrahldruckvorrichtung (1) gemäß Anspruch 4, wobei das Strömungsdurchgangselement (60) angeordnet ist, um durch eine Tintenheizeinheit (270) der Tintenstrahldruckvorrichtung (1) erwärmt zu werden.

6. Die Tintenstrahldruckvorrichtung (1) gemäß einem der Ansprüche 1 bis 5, ferner mit
einem Nebentank (245), der an dem Tintenzuführweg (24b) zwischen der Flüssigkeitsförderpumpe (243) und dem Tintenstrahlkopf (24a) vorgesehen ist und der konfiguriert ist, um von der Flüssigkeitsförderpumpe (243) geschickte Tinte zu speichern, und
einer Steuereinheit (40), die konfiguriert ist, um eine gespeicherte Menge Tinte in dem Nebentank (245) zu erfassen und einen Anwender zu benachrichtigen, wenn die erfasste gespeicherte Menge von einer vorbestimmten Menge verschieden ist.

## Revendications

1. Installation (1) d'impression à jet d'encre, comprenant :
un réservoir (51) d'encre, une tête (24a) à jet d'encre et un trajet (24b) d'alimentation en encre, qui est configuré pour envoyer de l'encre du réservoir (51) d'encre à la tête (24a) à jet d'encre, et un module (242) de dégazage, prévu sur le trajet (24b) d'alimentation en encre, pour enlever du gaz dissout dans de l'encre ;
une pompe (243) d'alimentation en liquide, qui est configurée pour alimenter en encre et qui est prévue sur le trajet (24b) d'alimentation en encre allant du module (242) de dégazage à la tête (24a) à jet d'encre ;
un filtre (246) d'élimination des substances étrangères, qui est prévu sur le trajet (24b) d'alimentation en encre, allant du module (242) de dégazage à la pompe (243) d'alimentation en liquide,
**caractérisée en ce que** l'installation d'impression à jet d'encre comprend, en outre :
un élément (60) de passage d'un écoulement à l'intérieur duquel est formé le trajet (24b) d'alimentation en encre entre le module (242) de dégazage et la pompe (243) d'alimentation en liquide,
dans laquelle le filtre (246) d'élimination des substances étrangères est attaché de manière détachable à une surface extérieure de l'élément (60) de passage d'un écoulement.

2. Installation (1) d'impression à jet d'encre suivant la revendication 1, dans laquelle le filtre (246) d'élimination des substances étrangères est configuré pour éliminer une substance étrangère ayant un diamètre de particule supérieur ou égal à 70µm.

3. Installation (1) d'impression à jet d'encre suivant la revendication 1 ou 2, dans laquelle le filtre (246) d'élimination de substances étrangères est configuré pour éliminer une substance étrangère ayant un diamètre de particule supérieur ou égal à un diamètre de buse de la tête (24a) à jet d'encre.

4. Installation (1) d'impression à jet d'encre suivant l'une quelconque des revendications 1 à 3, dans laquelle l'élément (60) de passage d'un écoulement est en un matériau, qui a un grand coefficient de transfert de la chaleur, en étant de préférence en métal.

5. Installation (1) d'impression à jet d'encre suivant la revendication 4, dans laquelle l'élément (60) de passage d'un écoulement est disposé de manière à être chauffé par une unité (270) de chauffage d'encre de l'installation (1) d'impression à jet d'encre.

6. Installation (1) d'impression à jet d'encre suivant l'une quelconque des revendications 1 à 5, comprenant, en outre
un sous-réservoir (245), qui est prévu sur le trajet (24b) d'alimentation en encre entre la pompe (243) d'alimentation en liquide et la tête (24a) à jet d'encre et qui est configuré pour emmagasiner de l'encre envoyée de la pompe (243) d'alimentation en liquide ; et
une unité (40) de commande, configurée pour détecter une quantité emmagasinée d'encre dans le sous-réservoir (245) et pour alerter un utilisateur dans le cas où la quantité emmagasinée, qui est détectée, est différente d'une quantité déterminée à l'avance.
